# EUROPEAN PATENT APPLICATION

(11) **EP 4 727 169 A1**
(43) Date of publication of application: **15.04.2026**
(21) Application number: 25207024.8
(22) Date of filing: 06.10.2025
(51) Int. Cl.: H04R 3/12, G06F 3/16, H04R 29/00

(54) **SYSTEMS AND METHODS FOR MANAGING IN-VEHICLE AUDIO LATENCIES**

(30) Priority: 08.10.2024 US 202418909843
(71) Applicant: Harman Becker Automotive Systems GmbH, 76307 Karlsbad (DE)
(72) Inventor: WINTON, Riley, Opelika, AL, 36804 (US); JORGENSEN, Gorm H., 7600 Struer (DK); LUDWIG, Chris, Bloomfield Hills, MI, 48304 (US); PANTHER, Heiko Gernot Albert, 10245 Berlin (DE); STEPHENS, Paul Matthew, Bainbridge Island, WA, 98110 (US); SCHNEIDER, David Patrick, Bloomfield Hills, MI, 48304 (US)
(74) Representative: Rummler, Felix

(57) **Abstract**

An integrated wireless audio unit (WAU) for a vehicle audio system is disclosed herein, that can take a plurality of audio streams as input, and output the audio streams to a plurality of output devices, where the output transmission is low latency (e.g., less than 15ms end-to-end) and time-synchronous (e.g., with no float or drift in latency). The input streams may be received via various protocols in the digital or analog domain, and the WAU may mix, blend, and process the input streams to generate the output streams, and broadcast the output streams to audio devices within the vehicle. The WAU may employ various strategies for synchronizing different types of audio streams, based on relevant factors. As a result, audio playback at the vehicle may be performed with tighter integration with vehicle speakers and tactile transducers, and a flexibility in routing the audio streams may be increased.

## Description

### TECHNICAL FIELD

Embodiments of the subject matter disclosed herein relate generally to audio communications within a cabin of a vehicle.

### BACKGROUND

In-vehicle communication while wearing wearable audio devices, such as earbuds or headphones, may be a poor experience. Wireless audio is generally slow, with Bluetooth^{®} having latencies of approximately 30-100ms and a highly variable end-to-and latency. As a result, a direct sound (e.g., sound coming directly from a speaker's vocal cords) may be heard first, and then reproduced speech may be heard later, generating an unnatural "echo" feeling.

Additionally, wireless transmission relies on low variance in latencies for audio integration with other system components. For example, tactile transducers or "base shakers" vibrate a seat in accordance with music played at the seat to enhance a listening experience of an occupant at the seat. However, the tactile transducers are typically be tuned and tightly integrated with a vehicle audio system. Having variable latency draft may result in an unnatural "sluggish" feeling, as the tactile transducers and wearable audio devices may not be synchronized. Wi-Fi audio may be too power-hungry and expensive to present a viable alternative option. Additionally, when multiple audio sources and audio devices are used simultaneously, latencies at each audio device may be different, where creating a natural listening experience may entail a separate synchronization of a wireless transmission to each audio device.

### SUMMARY

The current disclosure at least partially addresses one or more of the above identified issues by an audio system of a vehicle, comprising a wireless audio unit (WAU); a processor; and a non-transitory memory storing instructions that when executed, cause the processor to receive an audio input stream at the WAU; process the audio input stream at the WAU to generate a first audio output stream; process the audio input stream at the WAU to generate a second audio output stream, the second audio output stream different from the first audio output stream; concurrently transmit the first audio output stream to a first audio output device of the vehicle and the second audio output stream to a second audio output device of the vehicle; estimate a latency of the first audio output stream at the first audio output device with respect to the second audio output stream at the second audio output device; and in response to the latency being greater than a threshold latency, insert a delay in the second audio output stream to synchronize the first audio output stream and the second audio output stream.

The above advantages and other advantages, and features of the present description will be readily apparent from the following Detailed Description when taken alone or in connection with the accompanying drawings. It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

Various aspects of this disclosure may be better understood upon reading the following detailed description and upon reference to the drawings in which:
FIG. 1 is a schematic diagram of a vehicle, according to one or more embodiments of the disclosure;
FIG. 2 shows a block diagram of an exemplary embodiment of an audio system of a vehicle, according to one or more embodiments of the disclosure;
FIG. 3 shows a block diagram illustrating a flow of data through an audio system of a vehicle when synchronizing audio streams, according to one or more embodiments of the disclosure;
FIG. 4 is a flowchart illustrating a high-level method for transmitting a plurality of time-synchronized audio streams to different output devices of a vehicle, according to one or more embodiments of the disclosure;
FIG. 5 is a flowchart illustrating a first method for measuring a latency of an audio signal outputted by a wireless device, according to one or more embodiments of the disclosure;
FIG. 6 is a flowchart illustrating a second method for measuring a latency of an audio signal outputted by a wireless device, according to one or more embodiments of the disclosure; and
FIG. 7 is a block diagram illustrating an exemplary audio device that may detect and measure a latency between different audio streams, according to one or more embodiments of the disclosure.

The drawings illustrate specific aspects of the described systems and methods. Together with the following description, the drawings demonstrate and explain the structures, methods, and principles described herein. In the drawings, the size of components may be exaggerated or otherwise modified for clarity. Well-known structures, materials, or operations are not shown or described in detail to avoid obscuring aspects of the described components, systems, and methods.

### DETAILED DESCRIPTION

Systems and methods are disclosed herein for synchronizing audio streams played at different speakers in a vehicle, including wall, roof, or seat-integrated speakers, speakers of personal audio devices such as earbuds or headphones, subwoofers integrated into seats of the vehicle, tactile transducers integrated into seats of the vehicle, and/or other types of audio playback devices. When the audio streams are played at a set of wired traditional vehicle speakers, a latency in playing the audio streams may not be noticed, or may be easily managed. However, in modern vehicle cabin environments where multiple users may be listening to different audio signals, or different combinations of audio signals, at different speakers and devices, latencies between the signals may be more noticeable and more difficult to address.

For example, because some of the speakers may be coupled to an audio system of the vehicle via a wired connection, and some of the speakers may be coupled to the audio system via a wireless connection, different latencies may be observed and/or measured between different speakers. Further, the different latencies may be observed for different wireless speakers depending on a wireless communication protocol selected for a given audio signal. For example, a first speaker wirelessly connected to the audio system via the Bluetooth^{®} protocol may have a first latency, while a second speaker wirelessly connected to the audio system via an Ultra Wideband (UWB) protocol may have a second latency, for a same audio signal. A third communication protocol may generate a third latency, and so on.

The different latencies may also depend on a type of audio signal being transmitted. For example, a same communication protocol may result in speech audio signals being played with a first latency, and music being played with a second, different latency. Latency in speech may occur when a voice signal spoken by a first occupant of the vehicle is received at a microphone of a personal audio device, or a microphone integrated into a seat, roof, etc. of the vehicle, and the speech is rebroadcasted to other occupants of the vehicle via a plurality of audio devices. A latency of the rebroadcasted speech with respect to hearing the first occupant directly may create an unnatural or undesirable listening experience.

The listening experience of a user of the audio system may depend on the different audio signals being synchronized for each listener. That is, playback of a first audio signal for a first occupant of the vehicle may have to be synchronized between a first audio device and a first subwoofer of the first occupant; playback of a second audio signal for a second occupant of the vehicle may have to be synchronized between a second audio device and a second subwoofer of the second occupant; playback of a third audio signal for a third occupant of the vehicle may have to be between a third audio device and a third subwoofer of the third occupant; and so on. The different synchronizations may each depend on various factors, such as a seat a respective occupant is sitting in, a type of device the respective occupant is listening to, whether the device is connected to the audio system via a wired or wireless connection, a type of audio signal being played, and so on. A further problem is that there may be variance in some of the latencies, where a measurement of a latency may vary over time (e.g., drift) in either predictable or unpredictable ways.

To address this issue, an integrated wireless audio unit (WAU) for a vehicle audio system is disclosed herein, that can take a plurality of audio streams as input, and output (e.g., broadcast) the audio streams to a plurality of output devices, where the output transmission is low latency (e.g., less than 15ms end-to-end) and time-synchronous (e.g., with no float or drift in latency). The input streams may be received via various protocols in the digital or analog domain, and the WAU may mix, blend, and process the input streams to generate the output streams, and broadcast the output streams to audio devices within the vehicle. The WAU may employ various strategies for synchronizing different types of audio streams, based on relevant factors, as described herein. As a result, audio playback at the vehicle may be performed with tighter integration with vehicle speakers and tactile transducers, a flexibility in routing the audio streams may be increased, and more precise user controls may be provided for managing and controlling the audio streams. In particular, reproduced speech over the audio devices may be synchronized with the actual speech of an occupant, creating a more natural listening experience for other occupants of the vehicle.

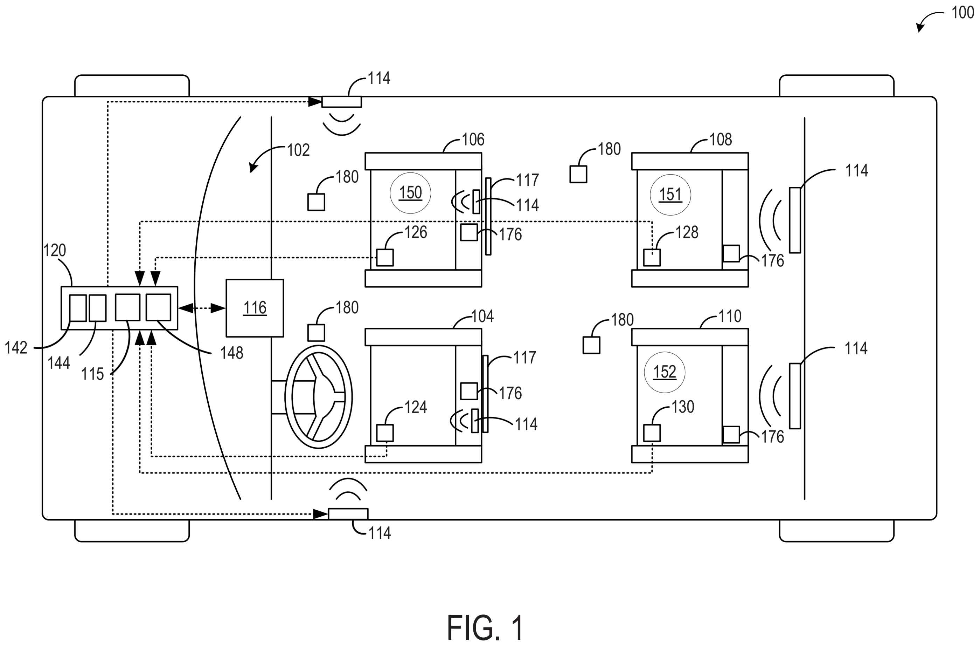

Turning now to the figures, FIG. 1 schematically shows an exemplary vehicle 100. The vehicle 100 includes a dashboard 102, a driver seat 104, a first passenger seat 106, a second passenger seat 108, and a third passenger seat 110. In other examples, the vehicle 100 may include more or fewer passenger seats. The driver seat 104 and the first passenger seat 106 are located in a front of the vehicle, proximate to the dashboard 102, and therefore may be referred to as front seats. The second passenger seat 108 and the third passenger seat 110 are located at a rear of the vehicle and may be referred to as back (or rear) seats.

Vehicle 100 includes a plurality of integrated speakers 114, which may be arranged around a periphery of the vehicle 100 and/or at seats (e.g., headrests) of vehicle 100. In some embodiments, the integrated speakers 114 are electronically coupled to an electronic control system of the vehicle, such as to a computing system 120, via a wired connection. In other embodiments, the integrated speakers 114 may wirelessly communicate with the computing system 120. As an example, an audio file may be generated by computing system 120 or selected by an occupant of the vehicle 100, and the selected audio file may be played at one or more of the integrated speakers 114. In some examples, audio alerts may be generated by the computing system 120 and also may be played at the integrated speakers 114. In some embodiments, audio files, signals, and/or alerts may be selected by or generated for an occupant of vehicle 100, and may be played an integrated speaker 114 associated with and/or proximal to a seat of the occupant. Further, in some embodiments, audio files, signals, and/or alerts selected by or generated for the occupant may be played at an integrated speaker 114 associated with and/or proximal to a seat of one or more other occupants of vehicle 100.

The vehicle 100 may further include a driver seat sensor 124 coupled to or within the driver seat 104 and a passenger seat sensor 126 coupled to or within the first passenger seat 106. The back seats may also include seat sensors, such as a passenger seat sensor 128 coupled to the second passenger seat 108 and a passenger seat sensor 130 coupled to the third passenger seat 110. The driver seat sensor 124 and the passenger seat sensor 126 may each include one or a plurality of sensors, such as a weight sensor, a pressure sensor, and one or more seat position sensors that output a measurement signal to the computing system 120. For example, the output of the weight sensor or pressure sensor may be used by the computing system 120 to determine whether or not the respective seat is occupied, and if occupied, a weight of a person occupying the seat. As another example, the output of the one or more seat position sensors may be used by the computing system 120 to determine one or more of an occupant of vehicle 100, a seat height, a longitudinal position with respect to the dashboard 102 and the back seats, and an angle (e.g., tilt) of a seat back of a corresponding seat.

Computing system 120 may include a user interface (UI) 116. Computing system 120 may receive inputs via UI 116 as well as output information to UI 116. The user interface 116 may be included in a digital cockpit, for example, and may include a display and one or more input devices. The one or more input devices may include one or more touchscreens, knobs, dials, hard buttons, and soft buttons for receiving user input from a vehicle occupant. UI 116 may include a display screen on which information, images, videos, and the like may be displayed. The display screen may be a touchscreen, and an occupant of vehicle 100 may interact with UI 116 via control elements displayed on the display screen.

Computing system 120 may also include an audio system 148, which may be configured to play audio content to one or more passengers of vehicle 100, and an in-vehicle infotainment (IVI) system 115, which may be configured to display video content and/or receive commands for selecting and interacting with the video content on UI 116. The video content may be displayed in coordination with audio content outputted by audio system 148. Audio system 148 may include a transmitter, which may transmit audio streams from audio system 148 to one or more audio devices and/or speakers located within the vehicle, such as speakers 114, as described in greater detail herein.

Computing system 120 may include one or more additional UIs 117, which may be positioned at locations accessible to back seat passengers of vehicle 100. In various embodiments, the one or more additional UIs 117 may comprise or be comprised by an RSE system. In other words, a first UI 117 may be positioned on a rear side of front seat 106, such that a first rear passenger sitting in rear seat 108 may interact with the first UI 117. A second UI 117 may be positioned on a rear side of driver's seat 104, such that a second rear passenger sitting in rear seat 110 may interact with the second UI 117. In vehicles including additional rear seats, additional UIs 117 may be arranged similarly such that each occupant of vehicle 100 may interact with a UI 117.

Each additional UI 117 may include the same or similar features included in UI 116, such as physical and/or virtual control elements, one or more display screens, etc. Additionally, each additional UI 117 may be configured to receive the same or different video and/or audio content from computing system 120 and display the content independently of other UI 117s. For example, computing system 120 may generate a first set of visual content on a first display screen associated with first UI 117; a second, different set of visual content on a second display screen associated with second UI 117; a third, different set of visual content on a third display screen associated with third UI 117; and so on. Similarly, a first occupant of vehicle 100 may interact with a first UI 117 to generate a first set of visual content on a first display screen associated with first UI 117; a second occupant of vehicle 100 may interact with a second UI 117 to generate a second, different set of visual content on a second display screen associated with second UI 117; a third occupant of vehicle 100 may interact with a third UI 117 to generate a third, different set of visual content on a third display screen associated with third UI 117; and so on. The sets of visual content may include associated audio content, which may be played at a respective speaker 114.

Additionally or alternatively, audio content may be played at personal audio devices of occupants of vehicle 100, such as a personal audio device 150 of an occupant of front passenger seat 106; a personal audio device 151 of an occupant of rear seat 108; and a personal audio device 152 of an occupant of rear seat 110. Personal audio devices 150-152 may include, for example, earbuds, wired or wireless headphones, or a different audio device. Further, personal audio devices 150-152 may include a respective microphone configured to receive voice and/or speech data from a respective occupant. That is, personal audio device 150 may be configured to receive voice data from a front passenger occupying seat 106; personal audio device 151 may be configured to receive voice data from a first rear passenger occupying seat 108; and personal audio device 152 may be configured to receive voice data from a second rear passenger occupying seat 110. Using the respective microphones, the front passenger, first rear passenger, and second rear passenger may communicate with each other, where speech generated by a first passenger may be received at a personal audio device 150-152 of a second passenger.

Computing system 120 includes a processor 142 configured to execute machine readable instructions stored in a memory 144. The processor 142 may be single core or multicore, and the programs executed by processor 142 may be configured for parallel or distributed processing. In some embodiments, the processor 142 is a microcontroller. The processor 142 may optionally include individual components that are distributed throughout two or more devices, which may be remotely located and/or configured for coordinated processing. In some embodiments, one or more aspects of the processor 142 may be virtualized and executed by remotely-accessible networked computing devices configured in a cloud computing configuration. For example, the computing system 120 may be communicatively coupled with a wireless network.

Computing system 120 may communicate with networked computing devices via short-range communication protocols, such as Bluetooth^{®}. In some embodiments, the computing system 120 may include other electronic components capable of carrying out processing functions, such as a digital signal processor, a field-programmable gate array (FPGA), or a graphic board. In some embodiments, the processor 142 may include multiple electronic components capable of carrying out processing functions. For example, the processor 142 may include two or more electronic components selected from a plurality of possible electronic components, including a central processor, a digital signal processor, a field-programmable gate array, and a graphics board. In still further embodiments, the processor 142 may be configured as a graphical processing unit (GPU), including parallel computing architecture and parallel processing capabilities.

Further, the memory 144 may include any non-transitory tangible computer readable medium in which programming instructions are stored. As used herein, the term "tangible computer readable medium" is expressly defined to include any type of computer readable storage. The example methods described herein may be implemented using coded instruction (e.g., computer readable instructions) stored on a non-transitory computer readable medium such as a flash memory, a read-only memory (ROM), a random-access memory (RAM), a cache, or any other storage media in which information is stored for any duration (e.g. for extended period time periods, permanently, brief instances, for temporarily buffering, and/or for caching of the information).

Computer memory of computer readable storage mediums as referenced herein may include volatile and non-volatile or removable and non-removable media for a storage of electronically formatted information, such as computer readable program instructions or modules of computer readable program instructions, data, etc. that may be stand-alone or as part of a computing device. Examples of computer memory may include any other medium which can be used to store the desired electronic format of information and which can be accessed by the processor or processors or at least a portion of a computing device. In various embodiments, the memory 144 may include an SD memory card, an internal and/or external hard disk, USB memory device, or a similar modular memory.

Audio system 148 may be configured to play audio content to one or more of speakers 114 and/or personal audio devices 150-152. Audio system 148 may provide an in-vehicle audio experience in which each user of the vehicle has their own sound zone. Passengers may use personal audio devices 150-152 and/or built-in speakers 114 to listen to audio content in a respective sound zone. The built-in speakers may include a subwoofer. For example, the front seat passenger of vehicle 100 may listen to music via personal audio device 150, while listening to output of a subwoofer integrated into speaker 114 of seat 106. Each user may listen to their own content (e.g., music played via a personal device such as a smartphone). Each user may additionally opt in or out of a communication channel between other users in the vehicle.

The sound zone of each user may have a dedicated microphone 180 that is configured as a part of the vehicle, for example mounted in a roof or a rear facing aspect of a headrest. For the communication channel, users who have opted into the communication channel may automatically hear spoken content from other users within the vehicle (e.g., received via a respective microphone 180), and audio content being played via their wearable device may be paused or played at a lower volume during transmission of the spoken content. A driver may have increased control over the communication channel to make announcements to all passengers, even when one or more passengers have opted out of the communication channel.

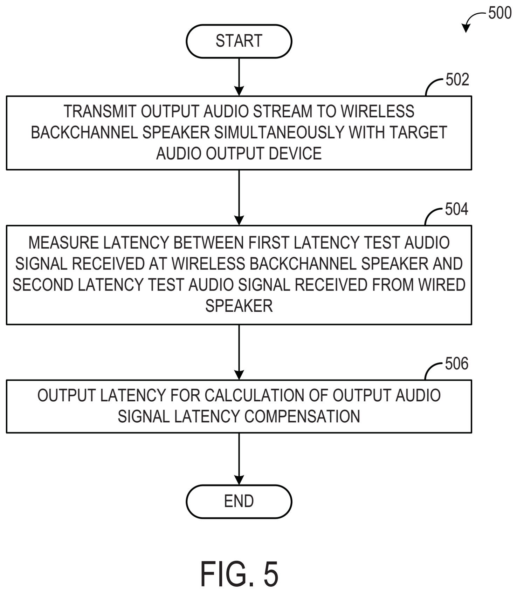

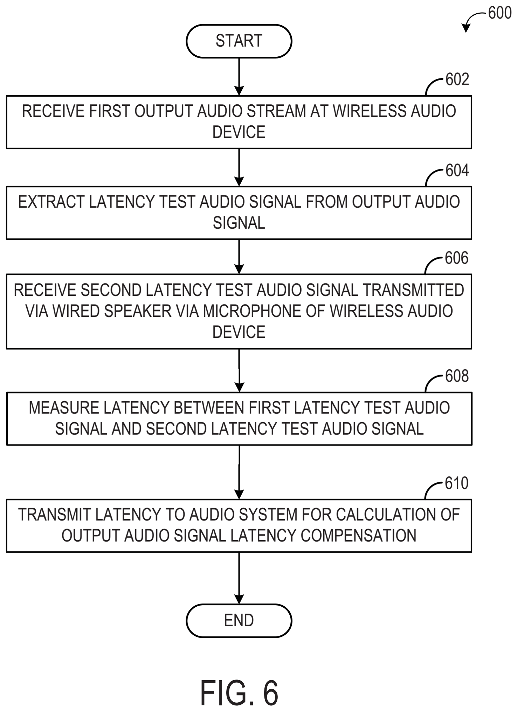

Each seat of vehicle 100 may further include a wireless backchannel speaker 176. Each wireless backchannel speaker 176 may receive and output a first audio output signal from audio system 148, which may be different from a second audio output signal transmitted from audio system 148 to a respective personal audio device 150, 151, and 152 of a passenger. The first audio output signal transmitted to wireless backchannel speaker 176 may be or include a latency test audio signal, which may be simultaneously outputted to a speaker 114. A latency between the latency test audio signal outputted by wireless backchannel speaker 176 and the speaker 114 may be measured, and the measured latency may be used to estimate a latency between audio output signals transmitted from audio system 148 to the respective personal audio devices 150, 151, or 152 and audio output signals transmitted from audio system 148 to speakers 114, to synchronize the audio output signals transmitted from audio system 148 to the respective personal audio devices 150, 151, or 152 and the audio output signals transmitted from audio system 148 to speakers 114. Measuring the latency using wireless backchannel speaker 176 is described in greater detail below in reference to FIGS. 5 and 6.

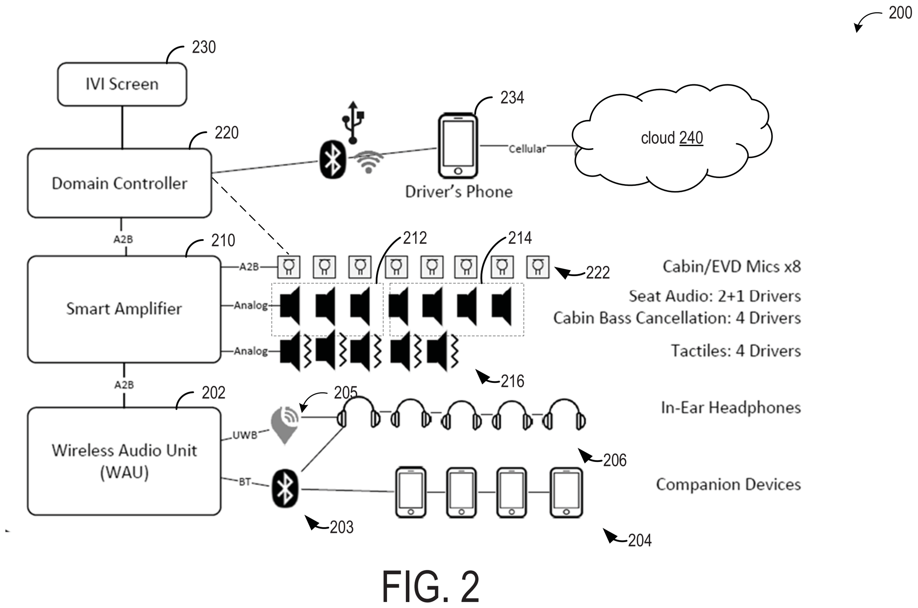

Additional features of the audio system 148 include transmitting sounds external to the vehicle to one or more users, transmitting vehicle sounds (e.g., engine revving, signal blinker, infotainment notifications, etc.) to one or more users, and manually sending audio content from one user to another user via a user interface. The configuration of the audio system 148 is described in greater detail below in reference to FIG. 2.

In some examples, the computing system 120 may include a plurality of subsystems or modules tasks with performing specific functions related to performing image acquisition and analysis. As used herein, the terms "system," "unit," or "module" may include a hardware and/or software system that operates to perform one or more functions. For example, a module, unit, or system may include a computer processor, controller, or other logic-based device that performs operations based on instructions stored on a tangible and non-transitory computer readable storage medium, such as a computer memory. Alternatively, a module, unit, or system may include a hard-wired device that performs operations based on hard-wired logic of the device. Various modules or units shown in the attached figures may represent the hardware that operates based on software or hardwired instructions, the software that directs hardware to perform the operations, or a combination thereof.

Referring now to FIG. 2, a schematic diagram of an exemplary audio system 200 of a vehicle is shown, which may be a non-limiting example of audio system 148 described above in reference to vehicle 100 of FIG. 1. Audio system 200 comprises a wireless audio unit (WAU) 202 that communicatively couples to one or more Bluetooth^{®} interfaces 203 of one or more personal devices 204 (e.g., smartphones). WAU 202 also communicatively couples to one or more UWB interfaces 205 of one or more personal audio devices 206 (e.g., personal audio devices 150, 151, and 152), such as headphones, earbuds, etc.. While FIG. 1 shows the personal devices 204 and personal audio devices 206 connected in series, it should be appreciated that each device may be individually communicatively coupled with WAU 202.

WAU 202 is further coupled to a smart amplifier 210. Smart amplifier 210 may have digital signal processing (DSP) capabilities in addition to amplification, which may allow the smart amplifier 210 to process the sound signal, determine and adjust latencies, and/or add effects that may improve or mask the perception of latency. Smart amplifier 210 may interface with a plurality of audio output devices (e.g., speakers 114), which may include a first plurality of headrest (seat) speakers 212, a second plurality of cabin bass speakers or subwoofers 214, and a third plurality of tactile transducers 216. Smart amplifier 210 further interfaces with one or more microphones 222 (e.g., microphones 180), via an audio bus. Smart amplifier 210 also couples to a domain controller 220, which may also be referred to herein as a head unit. Domain controller 220 may be positioned at a dashboard of the vehicle.

In some embodiments, domain controller 220 may interface with the one or more microphones 222. In such embodiments, smart amplifier 210 may not interface with the one or more microphones 222. An advantage of the one or more microphones interfacing with domain controller 220 rather than smart amplifier 210 may be that separate communication channels between the speakers 212, bass speakers 214, and tactile transducers 216 and the microphones 222 may be more easily facilitated.

The interface of smart amplifier 210 that couples to the speakers 212, 214, and 216, and the interface of smart amplifier 210 that couples to microphones 222 are separate interfaces. WAU 202 may be configured to establish a UWB channel into which each of the personal audio devices 206 may optionally join (e.g., via user selection in an app presented on a connected personal device 204, such as a smart phone). Audio may be transmitted from WAU 202 to each of the opted-in headphones via the UWB channel via a first interface. Audio may be separately transmitted to WAU 202 from the one or more of microphones 222 via a second interface. The personal audio devices 206 may be configured without built-in microphones, such that audio is not transmitted from personal audio devices 206 to WAU 202. Further, each of the opted-in headphones are not part of a same unit as the one or more of microphones 222 or coupled to the one or more of microphones 222. Thus, audio transmission and communication is unidirectional in audio system 200.

A user of audio system 200, such as a driver of a vehicle in which audio system 200 is installed, may control audio system 200 via an IVI screen 230. IVI screen 230 may be a non-limiting example of UI 116 of FIG. 1. Additionally or alternatively, the user may control audio system 200 via a companion application (app) installed on a personal computing device 234, such as a smart phone of the driver coupled to domain controller 220 via a wireless or wired connection. Personal computing device 234 may be connected to a cloud 240. As such, in some embodiments, one or more elements of audio system 200 may connect to one or more cloud-based services hosted at cloud 240 via the companion app and personal computing device 234.

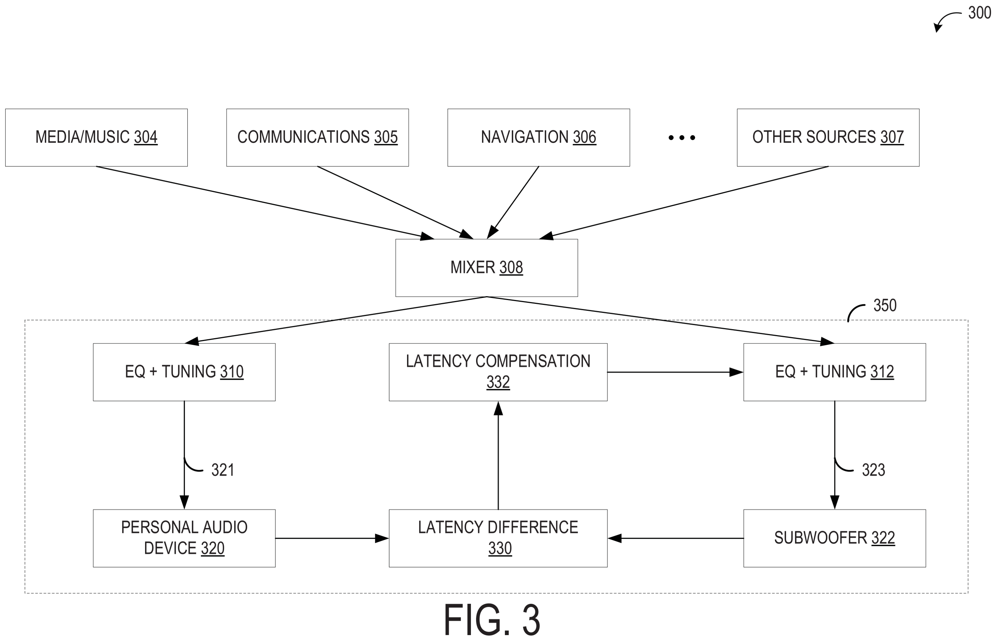

FIG. 3 shows a schematic latency compensation diagram 300, which shows a flow of data through an audio system such as audio system 200 during playing of audio content to an occupant of a vehicle, such as vehicle 100 of FIG. 1. In particular, FIG. 3 illustrates how latency issues involved in outputting different audio streams to different target devices used by the occupant may be overcome, in accordance with the systems and methods described herein. The audio system includes various components installed at an in-vehicle computing device, such as computing system 120. The various components may include a WAU, a smart amplifier, and a domain controller, such as WAU 202, smart amplifier 210, and domain controller 220 described above in reference to FIG. 2.

Audio content outputted by the audio system and directed at the occupant may be generated at one or more of various audio sources. The audio content may include media or music 304; communications 305, for example, from other occupants of the vehicle; navigation 306, such as directions or alerts; and/or audio content from one or more other audio sources 307.

The audio content may be mixed at a mixer 308, which may select and adjust audio content from the various audio sources in accordance with set preferences. After being mixed, the audio content may be sent to individual equalizing and tuning blocks for different target devices. For example, the audio content may include music, where a first portion of audio signals of the music are transmitted to a first equalizing and tuning block 310 for wireless transmission to a personal audio device 320 (e.g., personal audio devices 150, 151, 152) of the user, such as a set of headphones. Concurrently, a second portion of the audio signals of the music may be transmitted to a second equalizing and tuning block 312 for wired transmission to a subwoofer 322 integrated into a seat of the user. For example, the first portion may include audio data above a threshold frequency, and the second portion may include audio data below the threshold frequency.

A first amount of processing may be performed on the first portion of audio signals at first equalizing and tuning block 310. A second amount of processing may be performed on the second portion of audio signals at second equalizing and tuning block 312, where the second amount is different from the first amount. The processing performed at first equalizing and tuning block 310 and at second equalizing and tuning block 312 may be specific to a respective output device (e.g., subwoofer vs. personal audio device). In some examples, the processing performed at first equalizing and tuning block 310 and at second equalizing and tuning block 312 may be performed by an amplifier such as amplifier 210 of FIG. 2. In other examples, the processing performed at first equalizing and tuning block 310 and at second equalizing and tuning block 312 may be performed by a WAU such as WAU 202.

The first portion of audio signals and the second portion of audio signals may be played concurrently at personal audio device 320 and subwoofer 322, respectively. However, the first portion of audio signals may be played with a first latency at personal audio device 320, and the second portion of audio signals may be played with a second latency at subwoofer 322, where the first latency may be different from the second latency. In other words, because subwoofer 322 may be connected to the audio system via a wired connection 323, and personal audio device 320 may be connected to the audio system via a wireless connection 321, the first latency may be longer than the second latency. To synchronize the first and second portions of audio signals, a latency difference 330 may be measured (or estimated) between the first latency and the second latency. A latency compensation 332 may then be calculated, which may be used at equalizer and tuning block 312 to synchronize the first and second portions of audio signals. In other words, a portion 350 of latency compensation diagram 300 represents a control loop composed of latency detection and latency adjustment. The latency is compensated for by inserting additional delay into the lower-latency path (e.g., second equalizing and tuning block 312 and subwoofer 322). The delay may be inserted into the lower-latency path by a smart amplifier, such as smart amplifier 210 of FIG. 2.

It should be appreciated that FIG. 3 depicts a single latency difference 330 between audio signals played at two different playback devices. In other examples, various sets of audio signals may be played at various playback devices, and latency differences may be observed between a plurality of speakers, each of which may be compensated for.

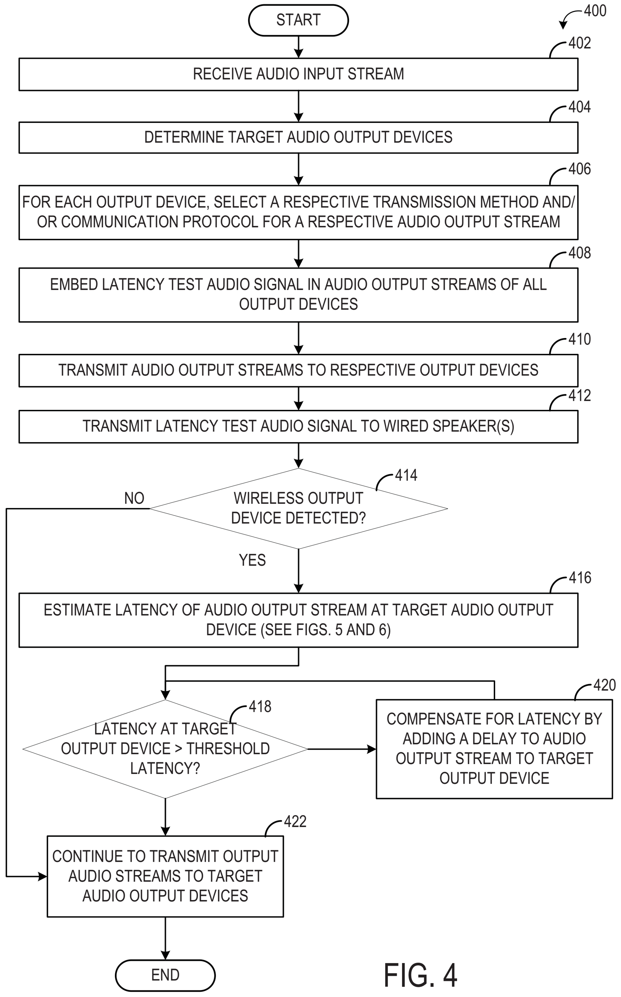

FIG. 4 shows a high-level method 400 for transmitting a plurality of time-synchronized audio streams to different output devices of a vehicle, such as vehicle 100 of FIG. 1, from an audio system such as audio system 200 of FIG. 2. Method 400 may be carried out by a processor of a computing system of the vehicle, such as processor 142, based on instructions stored in a memory of the vehicle such as memory 144. For example, method 400 may be performed by a processor of amplifier 210 of FIG. 2.

Method 400 begins at 402, where method 400 includes receiving an audio input stream. The audio input stream may be received from one or more of various sources, such as sound system of the vehicle configured to output music or other entertainment, news, or media content, communications or notifications issued by a controller or navigation system of the vehicle, or other sources. The audio input stream may be selected by a user of the vehicle, for example, via an IVI system of the vehicle (e.g., IVI system 115) accessed via controls on a dashboard of the vehicle (e.g., UI 116) or controls of a UI integrated into a seat or cabin of the vehicle (e.g., the one or more additional UIs 117).

The audio input stream may include speech of one occupant of the vehicle captured via a microphone of the vehicle (e.g., microphones 180). For example, a first occupant of the vehicle may wish to communicate with a second occupant of the vehicle who is listening to audio content via headphones. The first occupant may opt into a communication channel of the audio system. The audio system may prompt the second occupant to opt into the communication channel. If the second occupant opts into the communication channel, the audio system may output, via the WAU, an audio signal including the speech of the first occupant to the headphones of the second occupant. The second occupant may respond to the speech of the first occupant via a respective microphone within a sound zone of the second occupant. The speech of the first occupant and the second occupant may not be directed to an audio output device of a third occupant of the vehicle who has not opted into the communication channel. Alternatively, in some embodiments, voice output of the first occupant may be directed to the headphones of the second occupant without receiving a prompt from the first occupant, and without providing an input accepting the audio signal. For example, a parent of a child listening to music may wish to speak to the child.

At 404, method 400 includes determining one or more target audio output devices to which to direct the audio input stream. The one or more target audio output devices may include personal audio devices of one or more passengers of the vehicle, tactile speakers or subwoofers of the vehicle that may be integrated into seats of the vehicle, one or more speakers integrated into seats or other portions of the cabin of the vehicle, etc. The audio input stream may be configured (e.g., by mixer 308 of FIG. 3) with set preferences for outputting to the one or more target audio output devices.

The audio input stream may be one of a plurality of audio input streams that are concurrently or simultaneously outputted to a plurality of passengers of the vehicle. For example, a driver of the vehicle may wish to listen to a first audio content, such as a first musical selection. The driver may select the first audio content via a dashboard UI of an IVI system of the vehicle. The first audio content may be outputted at one or more speakers of the vehicle.

A first passenger sitting in a front passenger seat (e.g., seat 106) of the vehicle may wish to listen to a second audio content, such as a second musical selection. The first passenger may select the second audio content via a dashboard UI of an IVI system of the vehicle. The first passenger may select, via the UI, to listen to the second audio content via a set of headphones of the first passenger. For example, the IVI system may prompt the first passenger to select an audio output device from a list of candidate audio output devices displayed in the dashboard UI, and the first passenger may select the set of headphones from the list, and the second audio content may be outputted at the set of headphones. The list of candidate audio output devices may include a plurality of devices detected by the IVI system, the audio system, or a computing system of the vehicle. For example, the list of candidate audio output devices may be devices that are paired with the vehicle via Bluetooth^{®}.

A second passenger sitting in a first rear seat of the vehicle (e.g., seat 108) may also wish to listen to the second audio content. The second passenger may select the second audio content via a second UI of the IVI system integrated into a seat in front of the second passenger (e.g., seat 106). The IVI system may display the list of candidate audio output devices in the second UI, and prompt the second passenger to select an audio output device from the list of candidate audio output devices. The second passenger may select a first set of ear buds of the second passenger from the list, and the second audio content may be outputted to the set of ear buds.

A third passenger sitting in a second rear seat of the vehicle (e.g., seat 110) may wish to listen to a third audio content (e.g., a podcast). The third passenger may select the third audio content via a third UI of the IVI system integrated into a seat in front of the third passenger (e.g., seat 104). The IVI system may display the list of candidate audio output devices in the third UI, and prompt the third passenger to select an audio output device from the list of candidate audio output devices. The third passenger may select a second set of ear buds of the third passenger from the list, and the third audio content may be outputted to the second set of ear buds.

When the first audio content is outputted at the speakers of the vehicle for the driver, the first audio content may additionally be outputted at a first set of tactile transducers positioned in a seat of the driver (e.g., seat 104), which may vibrate the seat in accordance with the first musical selection. Thus, two audio output streams may be generated from the audio input stream selected by the driver: a first audio output stream to the one or more speakers of the vehicle, and a second audio output stream to the first set of tactile transducers. The first and second audio output streams may be outputted with a similar, low latency, due to the one or more speakers and the first set of tactile transducers being connected to the audio system via wired connections.

Similarly, when the second audio content is outputted at the headphones of the first passenger and the ear buds of the second passenger, the second audio content may additionally be outputted to a second set of tactile transducers positioned in a seat of the first passenger, and a third set of tactile transducers positioned in a seat of the second passenger, which may vibrate the respective seats in accordance with the second musical selection. Thus, four audio output streams may be generated from the audio input stream selected by the first passenger: a third audio output stream to the headphones of the first passenger, a fourth audio output stream to the second set of tactile transducers, a fifth audio output stream to the earbuds of the second passenger, and a sixth audio output stream to the third set of tactile transducers. The third audio output stream and the fourth audio output stream may be referred to herein as paired output streams, meaning output streams associated with a same audio input stream. The fifth audio output stream and the sixth audio output stream are also considered paired output streams.

However, unlike the first and second audio output streams of the driver, the third and fourth audio output streams may be outputted with different, detectable latencies, due to the headphones being connected to the audio system via a wireless connection and the second set of tactile transducers being connected to the audio system via a wired connection. Similarly, the fifth and sixth audio output streams may be outputted with different latencies due to the earbuds being connected to the audio system via a wireless connection and the third set of tactile transducers being connected to the audio system via a wired connection. That is, the third audio output stream to the headphones may be delayed in accordance with a first latency difference with respect to the fourth audio output stream to the second set of tactile transducers, and the fifth audio output stream to the earbuds may be delayed in accordance with a second latency difference with respect to the sixth audio output stream to the third set of tactile transducers. Additionally, the first latency difference may be less than the second latency difference, where a first delay of the third audio output stream perceived by the first passenger may be less than a second delay of the fifth audio output stream perceived by the second passenger, as a result of the earbuds of the second passenger being farther from a transmitter of the audio system than the headphones of the first passenger. Therefore, each of the audio output streams may be individually and differently configured to reduce the perception of delays, as described in steps 406-422 below.

At 406, method 400 includes, for each output device, selecting a respective transmission method for a respective audio output stream to be directed to the output device. The transmission method may depend on a connection between the respective output device and the audio system. If the connection is a wired connection, a first transmission method may be indicated, such as via an analog line signal, or PDM signal, transmitted on a shielded cable. Alternatively, if the connection is a wireless connection, a codec and communication protocol may be selected. For example, the communication protocol for the wireless connection may be a UWB communication protocol. By selecting the UWB communication protocol, a latency difference between audio output streams transmitted via wired and wireless connections may be reduced.

The codec and/or communication protocol selected for an output device may depend on a type of audio content transmitted in the audio output stream. For example, if the audio content includes music, a first codec and a first communication protocol may be selected (e.g., Bluetooth^{®}); if the audio content includes speech, a second codec and a second communication protocol may be selected (e.g., UWB). In other words, the UWB codec and protocol may provide for short latency, but not music fidelity; thus, UWB is an appropriate technology for voice communication. On the other hand, the Bluetooth^{®} codec and protocol provide increased latency at music (high) fidelity, and may therefore be more appropriate for music, but not for voice communication.

At 408, method 400 includes embedding a latency test audio signal in the audio output streams transmitted to each of the audio output devices. In various embodiments, the latency test audio signal may be an audio signal outside an audible frequency range, where the latency test audio signal may not be heard or perceived by listeners of the audio output streams. The latency test audio signal may include, for example, a characteristic pattern that repeats at regular intervals, which may facilitate a comparison of the first and second audio output streams. The specific properties of the test signal may depend on the requirements of a detection algorithm. For example, an autocorrelation method will work best with a test signal that provides high correlation when two signals are matched exactly.

At 410, method 400 includes transmitting the audio output streams to the respective output devices, using the selected codecs and communication protocols selected at 406. Additionally, at 412, method 400 includes transmitting the latency test audio signal via a wired speaker of the vehicle, such that the latency test audio signal may be captured via one or more microphones of the vehicle (e.g., microphones 180). The captured latency test audio signal may be used to determine a baseline latency of a wired transmission of the latency test audio signal, which may be compared to a variable latency of a wireless transmission of the latency test audio signal, as described below.

At 414, method 400 includes determining whether one or more of the target audio output devices are wireless devices. If no target audio output device is determined to be wireless at 414, meaning, that the target audio output devices have wired connections to the audio system, it may be inferred that latency differences between a first audio output stream at a relevant target audio output device and a second audio output stream of the same content at a different wired speaker (e.g., a tactile transducer) may be negligible, and method 400 proceeds to 422. At 422, method 400 includes continuing to transmit the audio output streams to the target audio output devices, and method 400 ends.

Alternatively, if at 414 it is determined that one or more target audio output devices are wireless devices, latency differences between audio output streams played at a relevant target audio output device and wired speakers of the vehicle may be significant, whereby method 400 proceeds to 416.

At 416, for each wireless target audio output device detected, method 400 includes estimating a latency of the audio output stream at the target audio output device, with respect to a paired audio output stream. Technically speaking, the latency may be a latency difference between a first latency of a (high-latency) audio output stream transmitted via a wireless connection and a second (negligible) latency of a paired (low-latency) audio output stream transmitted via a wired connection. Estimating the latency of the audio stream may be performed in various ways; two exemplary methods for estimating the latency are described in reference to FIGS. 5 and 6 below.

Once the latency of the audio output stream has been estimated, at 418, method 400 includes determining whether the estimated latency at the target audio output device is greater than a threshold latency. The threshold latency may be a latency that is detectible by a listener, or considered disorienting to the listener, where if the latency is less than the threshold latency, the listener may not detect or be bothered by the latency, and if the latency is greater than the threshold latency, the listener may perceive and/or be bothered by the latency. For example, the threshold latency may be 15ms. If the estimated latency is greater than the threshold latency, method 400 proceeds to 420.

At 420, method 400 includes compensating for the estimated latency, as described above with respect to latency compensation 332 of FIG. 3, by adding a delay to the audio output stream to the wireless target audio output device (e.g., the high-latency audio output stream), where the delay is based on the estimated latency. By adding the delay, the latency difference between the high-latency (wireless) audio stream and the low-latency (wired) audio stream may be reduced.

In various embodiments, the latency compensation may be performed in an iterative manner, as a control loop, where after compensating for the latency, method 400 proceeds back to 418 for a next iteration. That is, a first delay may be inserted into the audio output stream based on a first estimated latency; a second latency may be estimated, and a second delay may be inserted into the audio output stream based on the second estimated latency; a third latency may be estimated, and a third delay may be inserted into the audio output stream based on the third estimated latency; and so on, until the estimated latency is below the threshold latency. The iterative latency compensation may also maintain the estimated latency below the threshold latency in the event of variance in the latency over time.

FIG. 5 shows a first method 500 for estimating a difference in latencies between a first audio output stream outputted at a first audio output device, and a second audio output stream outputted at a second audio output device, where the first audio output stream and the second audio output stream are transmitted from an audio system of a vehicle simultaneously based on a selected audio input stream. Method 500 may be performed as part of method 400 of FIG. 4, by a processor of a computing system of the vehicle, such as processor 142 of vehicle 100, based on instructions stored in a memory of the vehicle such as memory 144. In various examples, the first audio output device may be a wireless device, such as a set of headphones or earbuds of an occupant of the vehicle, and the second audio output device may be a wired device, such as a set of tactile transducers integrated into a seat of the occupant. The first audio output stream and the second audio output stream may be transmitted to the first audio output device and the second audio output device, respectively, at the same time. However, due to a latency difference between wired and wireless connections, to a listener, the first audio output stream may be perceived as delayed with respect to the second audio output stream.

Method 500 begins at 502, where method 500 includes transmitting the first audio output stream to a wireless backchannel speaker positioned at a location of the occupant. The first audio output stream may be transmitted to the wireless backchannel speaker at the same time that the first audio output stream is transmitted to the first audio output device and the second audio output stream is transmitted to the second audio output device. In various embodiments, the wireless backchannel speaker may be hidden within and/or integrated into a seat of the occupant, such as wireless backchannel speaker 176 of FIG. 1. The wireless backchannel speaker may receive and output the first output audio signal. Because of a similarity of the wireless backchannel speaker with the first audio output device (e.g., headphones, earbuds, etc.), and because a first distance between the wireless backchannel speaker and a transmitter of the audio system may be approximately equal to a second distance between the first audio output device and the transmitter, a first latency of the first output audio stream at the wireless backchannel speaker may be equal to a second latency of the first output audio stream at the first audio output device, with respect to the second output audio stream at the second (wired) audio output device.

At 504, method 500 includes measuring a latency between a first latency test audio signal embedded in the first audio output stream, and a second, identical latency test audio signal outputted at a wired speaker of the vehicle, as described at step 412 of method 400. The first and second latency test audio signals may be in a frequency range that is inaudible to a human listener, whereby the first and second latency test audio signals may not be detected by occupants of the vehicle and may not interfere with a listening experience of the occupants of respective audio streams. The latency of the first latency test audio signal with respect to the second latency test audio signal (e.g., the latency difference 330 described in reference to FIG. 3) may be measured at the wireless backchannel speaker, which may compare the first latency test audio signal outputted by the wireless backchannel speaker with the second latency test audio signal outputted by the wired speaker. In some examples, the wired speaker may be positioned at the location of the wireless backchannel speaker, where a plurality of wired speakers may be positioned next to a respective plurality of wireless backchannel speakers at each seat of the vehicle. In other examples, the second latency test audio signal may be outputted by a single wired speaker of the vehicle, and the second latency test audio signal may be captured by a microphone positioned at a respective seat of the vehicle (e.g., microphones 180), and the captured second latency test audio signal may be compared with the first latency test audio signal. The latency or offset between the signals may, then, be determined by statistical methods such as autocorrelation; by machine-learning (ML) methods; or by other methods such as those provided by artificial intelligence (AI) approaches.

In some examples, the latency may be measured at a WAU of the audio system (e.g., WAU 202 of FIG. 2). In other examples, the latency may be measured at a relevant wireless backchannel speaker. For example, the wireless backchannel speaker may be a device including a processor and a memory that is configured to compare the first latency test audio signal and the second latency test audio signal and output the latency.

In some examples, latency test audio signals may not be used, and a third audio output stream identical to the first audio output stream may be transmitted to a wired speaker at the location of the wireless backchannel speaker. An output of the third audio output stream at the wired speaker may be recorded and compared to the first audio output stream to determine a latency of the first audio output stream to the third audio output stream. However, by embedding the latency test audio signal in the first audio output stream, and comparing the embedded latency test audio signal with an identical latency test audio signal outputted by the wired speaker, an amount of bandwidth consumed by wireless transmissions to occupants of the vehicle may be advantageously reduced.

At 506, method 500 includes outputting the measured latency of the first latency test audio signal with respect to the second latency test audio signal for a calculation of a latency compensation to be applied to the second audio output stream (e.g., latency compensation 332), as described in method 400. In other words, the measured latency may be considered to be nearly identical to an estimated latency of the first audio output stream with respect to the second audio output stream; as such, the measured latency may be used to estimate the latency of the first audio output stream. Method 500 ends.

FIG. 6 shows a second method 600 for estimating the difference in latencies between the first audio output stream outputted at the first audio output device, and the second audio output stream outputted at the second audio output device, where the first audio output stream and the second audio output stream are transmitted from the audio system of a vehicle simultaneously based on a selected audio input stream as in method 500 above. Method 600 may also be performed as part of method 400 of FIG. 4. However, method 600 may be performed by a processor integrated into a personal wireless audio device, based on instructions stored in a memory of the personal wireless audio device.

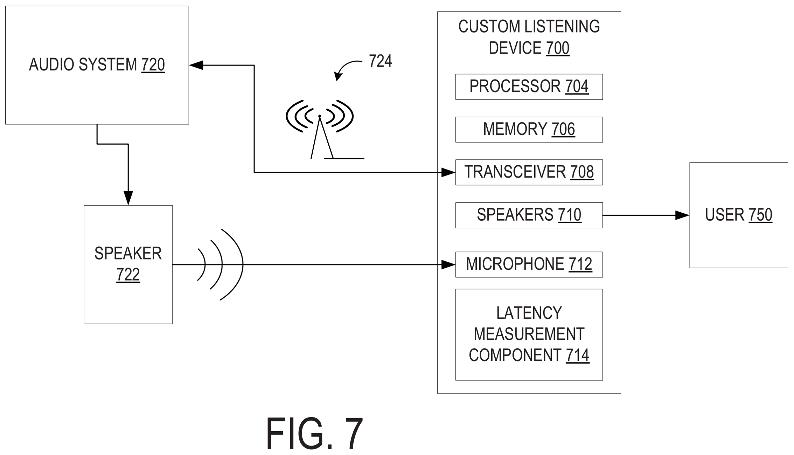

Referring briefly to FIG. 7, an exemplary wireless audio device 700 is shown that may perform method 600. Wireless audio device 700 includes a processor 704, a memory 706, a transceiver 708, a set of speakers 710, a microphone 712, and a latency measurement component 714. Wireless audio device 700 is wirelessly connected to an audio system 720 of a vehicle, such as audio system 200 of vehicle 100 of FIG. 1. Audio streams received at wireless audio device 700 from audio system 720 may be listened to by a user 750, via speakers 710. For example, speakers 710 may be headphones, and wireless audio device 700 may be worn on a head of user 750. Wireless audio device 700 may be similar to commercially available wireless headphones, earbuds, etc. However, wireless audio device 700 may be configured to measure a latency of a first audio stream received at transceiver 708 wirelessly from audio system 720 (via a wireless network 724), with respect to a second audio stream received at microphone 712 via a wired speaker 722 coupled to audio system 720.

In other words, audio system 720 may transmit audio content simultaneously via wireless network 724 and wired speaker 722. A first output stream of the audio content transmitted wirelessly by audio system 720 may be received by transceiver 708, and a second output stream of the audio content transmitted via wired speaker 722 may be captured at microphone 712. However, the first output stream may have a latency with respect to the second output stream, due to a lower data transfer rate of a wireless connection between wireless audio device 700 and audio system 720 with respect to wired speaker 722, and/or a distance between wireless audio device 700 and audio system 720. To compensate for the latency, latency measurement component 714 may compare the first output stream with the second output stream and measure a latency of the first output stream with respect to the second output stream. The measured latency may then be transmitted back to audio system 720 via transceiver 708. Audio system 720 may then compensate for the latency by introducing a delay in the second output stream, such that the first audio stream received at transceiver 708 in time-synchronized with the second audio stream received at microphone 712 via speaker 722.

Now returning to method 600, the method begins at 602, where method 600 includes receiving a first audio output stream at the wireless audio device, via a transceiver of the wireless audio device (e.g., transceiver 708). At 604, a latency test audio signal embedded in the first audio output stream may be extracted from the first audio output stream, as described above in reference to FIG. 5.

At 606, method 600 includes receiving a second latency test audio signal via a microphone (e.g., microphone 712) of the wireless audio device. The second latency test audio signal may be transmitted via a wired speaker of the vehicle, as described in step 412 of method 400.

At 608, method 600 includes measuring a latency between the first latency test audio signal embedded in the first audio output stream, and the second, identical latency test audio signal received at the microphone. The first and second latency test audio signals may be in a frequency range that is inaudible to a human listener, whereby the first and second latency test audio signals may not be detected by occupants of the vehicle and may not interfere with a listening experience of a user of the wireless audio device. The latency of the first latency test audio signal with respect to the second latency test audio signal (e.g., the latency difference 330 described in reference to FIG. 3) may be measured at the wireless audio device (e.g., at latency measurement component 714).

At 610, method 600 includes transmitting the measured latency of the first latency test audio signal with respect to the second latency test audio signal to the audio system for a calculation of a latency compensation to be applied to the second audio output stream (e.g., latency compensation 332), as described in method 400, and method 600 ends.

Thus, methods 600 and 700 represent two different methods for measuring a latency between a first audio output stream transmitted by an audio system of a vehicle to a wireless device by via a wireless network (e.g., using a communication protocol such as Bluetooth^{®} or UWB), and a second, identical audio output stream transmitted to a speaker or audio output device coupled to an audio system via a wired connection. For suitably configured wireless devices, such as wireless devices associated with the audio system, the latency may be measured at the device, by advantageously using a microphone of the custom wireless audio device to capture the second audio output stream and subsequently comparing the second audio output stream to the first audio output stream. Alternatively, a wireless backchannel audio output device may be positioned approximately at a location of a audio device of an occupant of the vehicle, and an output of the wireless backchannel audio output device may be used as a proxy for the audio device to determine the latency. In other words, the measured latency may be used to estimate the latency of the first audio output stream with respect to the second audio output stream, which may be identical or close to identical. A delay may then be introduced into the second audio output stream, based on the estimated latency, to synchronize the second audio output stream with the first audio output stream.

The methods may be performed concurrently for a plurality of occupants of the vehicle, each occupant positioned at a different location of the vehicle and potentially experiencing a different latency from other occupants. In this way, a synchronization of audio playback at different sets of audio output devices may be synchronized individually for each occupant, in a manner that may not be detected by the occupant and that may not interfere with the listening experiences of other occupants of the vehicle. Further, to reduce an amount of information that is wirelessly transmitted within the vehicle and to conserve a bandwidth of the wireless communication, the latency measurement may be made using a low data test signal embedded in audio streams outputted at various audio output devices. The low data test signal may include a characteristic pattern that repeats at regular intervals, which may facilitate a comparison of the first and second audio output streams, such that the latency may be measured more rapidly and with less computation than measuring a latency between more complex audio streams, such as music.

The technical effect of estimating a latency between a first audio output stream transmitted wirelessly to a personal audio device within a vehicle and a second audio output stream transmitted via a wired audio output device of the vehicle by measuring a latency between a first test signal embedded in the first audio output stream with a second test signal outputted in the second audio output stream is that an amount of computation used to measure the latency may be reduced, and an amount of bandwidth consumed in measuring the latency may be reduced.

The disclosure also provides support for an audio system of a vehicle, comprising: a wireless audio unit (WaU), a processor, and a non-transitory memory storing instructions that when executed, cause the processor to: receive an audio input stream at the WaU, process the audio input stream at the WaU to generate a first audio output stream, process the audio input stream at the WaU to generate a second audio output stream, the second audio output stream different from the first audio output stream, concurrently transmit the first audio output stream to a first audio output device of the vehicle and the second audio output stream to a second audio output device of the vehicle, estimate a latency of the first audio output stream at the first audio output device with respect to the second audio output stream at the second audio output device, and in response to the latency being greater than a threshold latency, insert a delay in the second audio output stream to synchronize the first audio output stream and the second audio output stream. In a first example of the system, first audio output device is a personal audio device of an occupant of the vehicle that receives the first audio output stream via wireless connection, and the second audio output device is coupled to the audio system via a wired connection. In a second example of the system, optionally including the first example, further instructions are stored in the memory that when executed, cause the processor to generate the first audio output stream using a first communication protocol, and generate the second audio output stream using a second communication protocol, the second communication protocol different from the first communication protocol. In a third example of the system, optionally including one or both of the first and second examples, the first communication protocol is an ultra-wide band (UWB) protocol. In a fourth example of the system, optionally including one or more or each of the first through third examples, further instructions are stored in the memory that when executed, cause the processor to: detect a type of audio content included in the first audio output stream, in response to the type of audio content including a threshold amount of speech, select a UWB protocol as the first communication protocol, and in response to the type of audio content including a threshold amount of music, select the Bluetooth^{®} protocol as the first communication protocol. In a fifth example of the system, optionally including one or more or each of the first through fourth examples, the personal audio device is one of earbuds or headphones, and the second audio output device is integrated into a seat of the occupant and includes one of a tactile transducer and a subwoofer. In a sixth example of the system, optionally including one or more or each of the first through fifth examples, further instructions are stored in the memory that when executed, cause the processor to: embed a latency test audio signal in the first audio output stream, transmit the first audio output stream to a wireless backchannel speaker positioned proximate to the personal audio device concurrently with the first audio output stream and the second audio output stream, transmit the latency test audio signal to a wired speaker of the vehicle coupled to the audio system via a wired connection concurrently with the first audio output stream and the second audio output stream, and measure a latency of the latency test audio signal at the personal audio device with respect to the latency test audio signal at the wired speaker. In a seventh example of the system, optionally including one or more or each of the first through sixth examples, the wireless backchannel speaker is integrated into a seat of the occupant. In a eighth example of the system, optionally including one or more or each of the first through seventh examples, the latency test audio signal is in a frequency range that is inaudible to occupants of the vehicle. In a ninth example of the system, optionally including one or more or each of the first through eighth examples, a first unidirectional communication channel allows for audio to be sent from the WAU to either of the first audio output device and the second audio output device, and a second unidirectional channel allows for audio to be sent from a microphone of one or more microphones of the audio system to the WAU, and the first and second audio output devices are not part of a same unit of the microphone or coupled to the microphone, and the first audio output device and the second audio output device do not transmit audio signals back to the WAU, and the WAU does not send audio signals to the microphone. In a tenth example of the system, optionally including one or more or each of the first through ninth examples, a first interface couples a smart amplifier of the audio system to the first audio output device and the second audio output device, and a second interface couples the smart amplifier to the one or more microphones of the vehicle. In a eleventh example of the system, optionally including one or more or each of the first through tenth examples, a first interface couples a smart amplifier of the audio system to the first audio output device and the second audio output device, and a second interface couples a domain controller of the audio system to the one or more microphones of the vehicle.

The disclosure also provides support for a method for an audio system of a vehicle, the method comprising: receiving an audio input stream, processing the audio input stream at a wireless audio unit (WaU) of the audio system to generate a first audio output stream, processing the audio input stream at the WaU to generate a second audio output stream different from the first audio output stream, concurrently transmitting the first audio output stream to a first audio output device of the vehicle and transmitting the second audio output stream to a second audio output device of the vehicle, and in response to detecting a latency of the first audio output stream at the first audio output device with respect to the second audio output stream at the second audio output device, inserting a delay in the second audio output stream to synchronize the first audio output stream and the second audio output stream, wherein the first audio output device is a wireless personal audio device of an occupant of the vehicle, and the second audio output device one of a tactile transducer integrated into a seat of the occupant and a subwoofer, the second audio output device coupled to the audio system via a wired connection. In a first example of the method, processing the audio input stream at the WAU to generate the first audio output stream and the second audio output stream further comprises: detecting that the first audio output device is a wireless device, and in response, generating the first audio output stream using a first transmission method and/or communication protocol, and generating the second audio output stream using a second transmission method and/or communication protocol, the second transmission method and/or communication protocol different from the first transmission method and/or communication protocol. In a second example of the method, optionally including the first example, the first transmission method and/or communication protocol includes an ultra-wide band (UWB) communication protocol. In a third example of the method, optionally including one or both of the first and second examples, processing the audio input stream at the WAU to generate the first audio output stream further comprises: embedding a latency test audio signal in the first audio output stream, transmitting the first audio output stream to a wireless device positioned at a seat of the occupant concurrently with the first audio output stream and the second audio output stream, transmitting the latency test audio signal to a wired speaker of the vehicle coupled to the audio system via a wired connection concurrently with the first audio output stream and the second audio output stream, and measure a latency of the latency test audio signal at the wireless device with respect to the latency test audio signal at the wired speaker. In a fourth example of the method, optionally including one or more or each of the first through third examples, the latency test audio signal is in a frequency range that is inaudible to occupants of the vehicle. In a fifth example of the method, optionally including one or more or each of the first through fourth examples, the wireless device is a wireless backchannel speaker integrated into a seat of the occupant. In a sixth example of the method, optionally including one or more or each of the first through fifth examples, the wireless device is a personal audio device configured to capture the latency test audio signal at the wired speaker via a microphone of the personal audio device, and measure the latency of the embedded latency test audio signal with respect to the captured latency test audio signal.

The disclosure also provides support for an audio system of a vehicle, comprising: a wireless personal audio device including a processor and a non-transitory memory storing instructions that when executed, cause the processor to: receive a first audio output stream transmitted from a wireless audio unit (WaU) of the audio system, extract a latency test audio signal from the first audio output stream, the latency test audio signal having a frequency range inaudible to occupants of the vehicle, capture a second audio output stream transmitted from the WaU to a speaker of the vehicle concurrently with the first audio output stream, via a microphone of the wireless personal audio device, the second audio output stream including the latency test audio signal, measure a latency of the first audio output stream with respect to the second audio output stream, transmit the measured latency to the audio system.

In another representation, an audio system of a vehicle comprises a wireless audio unit (WAU); a smart amplifier; a domain controller; a processor; and a non-transitory memory storing instructions that when executed, cause the processor to: receive an audio input stream at the WAU; process the audio input stream at the WAU to generate a first audio output stream; process the audio input stream at the WAU to generate a second audio output stream, the second audio output stream different from the first audio output stream; concurrently transmit the first audio output stream to a first audio output device of the vehicle and the second audio output stream to a second audio output device of the vehicle, via a first interface with the smart amplifier; estimate a latency of the first audio output stream at the first audio output device with respect to the second audio output stream at the second audio output device, based on a latency test audio signal received at a microphone of the vehicle via a second interface with the domain controller; and in response to the latency being greater than a threshold latency, insert a delay in the second audio output stream to synchronize the first audio output stream and the second audio output stream.

When introducing elements of various embodiments of the present disclosure, the articles "a," "an," and "the" are intended to mean that there are one or more of the elements. The terms "first," "second," and the like, do not denote any order, quantity, or importance, but rather are used to distinguish one element from another. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object. In addition, it should be understood that references to "one embodiment" or "an embodiment" of the present disclosure are not intended to be interpreted as excluding the existence of additional embodiments that also incorporate the recited features.

In addition to any previously indicated modification, numerous other variations and alternative arrangements may be devised by those skilled in the art without departing from the spirit and scope of this description, and appended claims are intended to cover such modifications and arrangements. Thus, while the information enhancement described above with particularity and detail in connection with what is presently deemed to be the most practical and preferred aspects, it will be apparent to those of ordinary skill in the art that numerous modifications, including, but not limited to, form, function, manner of operation and use may be made without departing from the principles and concepts set forth herein. Also, as used herein, the examples and embodiments, in all respects, are meant to be illustrative only and should not be construed to be limiting in any manner.

### FURTHER EXAMPLES

The following examples pertain to further claimed or unclaimed features. Any of the described examples which do not fully correspond to the invention as defined in the claims is thus not according to the invention and present for illustration purposes only or to highlight specific aspects or features of the claims.

Example 1: An audio system of a vehicle, comprising: a wireless audio unit (WAU); a processor; and a non-transitory memory storing instructions that when executed, cause the processor to: receive an audio input stream at the WAU; process the audio input stream at the WAU to generate a first audio output stream; process the audio input stream at the WAU to generate a second audio output stream, the second audio output stream different from the first audio output stream; concurrently transmit the first audio output stream to a first audio output device of the vehicle and the second audio output stream to a second audio output device of the vehicle; estimate a latency of the first audio output stream at the first audio output device with respect to the second audio output stream at the second audio output device; and in response to the latency being greater than a threshold latency, insert a delay in the second audio output stream to synchronize the first audio output stream and the second audio output stream.

Example 2: The audio system of example 1, wherein first audio output device is a personal audio device of an occupant of the vehicle that receives the first audio output stream via wireless connection, and the second audio output device is coupled to the audio system via a wired connection.

Example 3. The audio system of example 2, wherein further instructions are stored in the memory that when executed, cause the processor to generate the first audio output stream using a first communication protocol, and generate the second audio output stream using a second communication protocol, the second communication protocol different from the first communication protocol.

Example 4. The audio system of example 3, wherein the first communication protocol is an ultra-wide band (UWB) protocol.

Example 5. The audio system of example 3 or 4, wherein further instructions are stored in the memory that when executed, cause the processor to: detect a type of audio content included in the first audio output stream; in response to the type of audio content including a threshold amount of speech, select a UWB protocol as the first communication protocol; and in response to the type of audio content including a threshold amount of music, select the Bluetooth^{®} protocol as the first communication protocol.

Example 6: The audio system of any of examples 2 to 5, wherein the personal audio device is one of earbuds or headphones, and the second audio output device is integrated into a seat of the occupant and includes one of a tactile transducer and a subwoofer.

Example 7: The audio system of any of examples 2 to 6, wherein further instructions are stored in the memory that when executed, cause the processor to: embed a latency test audio signal in the first audio output stream; transmit the first audio output stream to a wireless backchannel speaker positioned proximate to the personal audio device concurrently with the first audio output stream and the second audio output stream; transmit the latency test audio signal to a wired speaker of the vehicle coupled to the audio system via a wired connection concurrently with the first audio output stream and the second audio output stream; and measure a latency of the latency test audio signal at the personal audio device with respect to the latency test audio signal at the wired speaker.

Example 8: The audio system of example 7, wherein the wireless backchannel speaker is integrated into a seat of the occupant.

Example 9: The audio system of example 7 or 8, wherein the latency test audio signal is in a frequency range that is inaudible to occupants of the vehicle.

Example 10: The audio system of any of the preceding examples, wherein a first unidirectional communication channel allows for audio to be sent from the WAU to either of the first audio output device and the second audio output device, and a second unidirectional channel allows for audio to be sent from a microphone of one or more microphones of the audio system to the WAU, and the first and second audio output devices are not part of a same unit of the microphone or coupled to the microphone; and the first audio output device and the second audio output device do not transmit audio signals back to the WAU, and the WAU does not send audio signals to the microphone.

Example 11: The audio system of example 10, wherein a first interface couples a smart amplifier of the audio system to the first audio output device and the second audio output device, and a second interface couples the smart amplifier to the one or more microphones of the vehicle.

Example 12: The audio system of example 10 or 11, wherein a first interface couples a smart amplifier of the audio system to the first audio output device and the second audio output device, and a second interface couples a domain controller of the audio system to the one or more microphones of the vehicle.

Example 13: A method for an audio system of a vehicle, the method comprising: receiving an audio input stream; processing the audio input stream at a wireless audio unit (WAU) of the audio system to generate a first audio output stream; processing the audio input stream at the WAU to generate a second audio output stream different from the first audio output stream; concurrently transmitting the first audio output stream to a first audio output device of the vehicle and transmitting the second audio output stream to a second audio output device of the vehicle; and in response to detecting a latency of the first audio output stream at the first audio output device with respect to the second audio output stream at the second audio output device, inserting a delay in the second audio output stream to synchronize the first audio output stream and the second audio output stream; wherein the first audio output device is a wireless personal audio device of an occupant of the vehicle, and the second audio output device one of a tactile transducer integrated into a seat of the occupant and a subwoofer, the second audio output device coupled to the audio system via a wired connection.

Example 14: The method of example 13, wherein processing the audio input stream at the WAU to generate the first audio output stream and the second audio output stream further comprises: detecting that the first audio output device is a wireless device, and in response, generating the first audio output stream using a first transmission method and/or communication protocol; and generating the second audio output stream using a second transmission method and/or communication protocol, the second transmission method and/or communication protocol different from the first transmission method and/or communication protocol.

Example 15: The method of example 14, wherein the first transmission method and/or communication protocol includes an ultra-wide band (UWB) communication protocol.

Example 16: The method of any of examples 13 to 15, wherein processing the audio input stream at the WAU to generate the first audio output stream further comprises: embedding a latency test audio signal in the first audio output stream; transmitting the first audio output stream to a wireless device positioned at a seat of the occupant concurrently with the first audio output stream and the second audio output stream; transmitting the latency test audio signal to a wired speaker of the vehicle coupled to the audio system via a wired connection concurrently with the first audio output stream and the second audio output stream; and measure a latency of the latency test audio signal at the wireless device with respect to the latency test audio signal at the wired speaker.

Example 17: The method of example 16, wherein the latency test audio signal is in a frequency range that is inaudible to occupants of the vehicle.

Example 18: The method of example 16 or 17, wherein the wireless device is a wireless backchannel speaker integrated into a seat of the occupant.

Example 19: The method of any of examples 16 to 18, wherein the wireless device is a personal audio device configured to capture the latency test audio signal at the wired speaker via a microphone of the personal audio device, and measure the latency of the embedded latency test audio signal with respect to the captured latency test audio signal.

Example 20: An audio system of a vehicle, comprising: a wireless personal audio device including a processor and a non-transitory memory storing instructions that when executed, cause the processor to: receive a first audio output stream transmitted from a wireless audio unit (WAU) of the audio system; extract a latency test audio signal from the first audio output stream, the latency test audio signal having a frequency range inaudible to occupants of the vehicle; capture a second audio output stream transmitted from the WAU to a speaker of the vehicle concurrently with the first audio output stream, via a microphone of the wireless personal audio device, the second audio output stream including the latency test audio signal; measure a latency of the first audio output stream with respect to the second audio output stream; transmit the measured latency to the audio system.

## Claims

1. An audio system of a vehicle, comprising:
a wireless audio unit (WAU);
a processor; and
a non-transitory memory storing instructions that when executed, cause the processor to:
receive an audio input stream at the WAU;
process the audio input stream at the WAU to generate a first audio output stream;
process the audio input stream at the WAU to generate a second audio output stream, the second audio output stream different from the first audio output stream;
concurrently transmit the first audio output stream to a first audio output device of the vehicle and the second audio output stream to a second audio output device of the vehicle;
estimate a latency of the first audio output stream at the first audio output device with respect to the second audio output stream at the second audio output device; and
in response to the latency being greater than a threshold latency, insert a delay in the second audio output stream to synchronize the first audio output stream and the second audio output stream.

2. The audio system of claim 1, wherein first audio output device is a personal audio device of an occupant of the vehicle that receives the first audio output stream via wireless connection, and the second audio output device is coupled to the audio system via a wired connection.

3. The audio system of claim 2, wherein further instructions are stored in the memory that when executed, cause the processor to generate the first audio output stream using a first communication protocol, and generate the second audio output stream using a second communication protocol, the second communication protocol different from the first communication protocol.

4. The audio system of claim 3, wherein the first communication protocol is an ultra-wide band (UWB) protocol.

5. The audio system of claim 3, wherein further instructions are stored in the memory that when executed, cause the processor to:
detect a type of audio content included in the first audio output stream;
in response to the type of audio content including a threshold amount of speech, select a UWB protocol as the first communication protocol; and
in response to the type of audio content including a threshold amount of music, select the Bluetooth^{®} protocol as the first communication protocol.

6. The audio system of claim 2, wherein the personal audio device is one of earbuds or headphones, and the second audio output device is integrated into a seat of the occupant and includes one of a tactile transducer and a subwoofer.

7. The audio system of claim 2, wherein further instructions are stored in the memory that when executed, cause the processor to:
embed a latency test audio signal in the first audio output stream;
transmit the first audio output stream to a wireless backchannel speaker positioned proximate to the personal audio device concurrently with the first audio output stream and the second audio output stream;
transmit the latency test audio signal to a wired speaker of the vehicle coupled to the audio system via a wired connection concurrently with the first audio output stream and the second audio output stream; and
measure a latency of the latency test audio signal at the personal audio device with respect to the latency test audio signal at the wired speaker.

8. The audio system of claim 7, wherein the wireless backchannel speaker is integrated into a seat of the occupant.

9. The audio system of claim 7, wherein the latency test audio signal is in a frequency range that is inaudible to occupants of the vehicle.

10. The audio system of claim 1, wherein a first unidirectional communication channel allows for audio to be sent from the WAU to either of the first audio output device and the second audio output device, and a second unidirectional channel allows for audio to be sent from a microphone of one or more microphones of the audio system to the WAU, and the first and second audio output devices are not part of a same unit of the microphone or coupled to the microphone; and
the first audio output device and the second audio output device do not transmit audio signals back to the WAU, and the WAU does not send audio signals to the microphone.

11. The audio system of claim 10, wherein a first interface couples a smart amplifier of the audio system to the first audio output device and the second audio output device, and a second interface couples the smart amplifier to the one or more microphones of the vehicle.

12. The audio system of claim 10, wherein a first interface couples a smart amplifier of the audio system to the first audio output device and the second audio output device, and a second interface couples a domain controller of the audio system to the one or more microphones of the vehicle.

13. A method for an audio system of a vehicle, the method comprising:
receiving an audio input stream;
processing the audio input stream at a wireless audio unit (WAU) of the audio system to generate a first audio output stream;
processing the audio input stream at the WAU to generate a second audio output stream different from the first audio output stream;
concurrently transmitting the first audio output stream to a first audio output device of the vehicle and transmitting the second audio output stream to a second audio output device of the vehicle; and
in response to detecting a latency of the first audio output stream at the first audio output device with respect to the second audio output stream at the second audio output device, inserting a delay in the second audio output stream to synchronize the first audio output stream and the second audio output stream;
wherein the first audio output device is a wireless personal audio device of an occupant of the vehicle, and the second audio output device one of a tactile transducer integrated into a seat of the occupant and a subwoofer, the second audio output device coupled to the audio system via a wired connection.

14. The method of claim 13, wherein processing the audio input stream at the WAU to generate the first audio output stream and the second audio output stream further comprises:
detecting that the first audio output device is a wireless device, and in response, generating the first audio output stream using a first transmission method and/or communication protocol; and
generating the second audio output stream using a second transmission method and/or communication protocol, the second transmission method and/or communication protocol different from the first transmission method and/or communication protocol.

15. The method of claim 14, wherein the first transmission method and/or communication protocol includes an ultra-wide band (UWB) communication protocol.
